# EUROPEAN PATENT APPLICATION

(11) **EP 3 628 195 A1**
(43) Date of publication of application: **01.04.2020**
(21) Application number: 18197088.0
(22) Date of filing: 27.09.2018
(51) Int. Cl.: A47J 31/52, A47J 31/44

(54) **BEVERAGE PREPARATION MACHINE WITH RECIPIENT DETECTION**

(71) Applicant: Société des Produits Nestlé S.A., 1800 Vevey (CH)
(72) Inventor: GUYON, Bertrand, 25160 Saint Point Lac (FR); MAGATTI, Marco, 1010 Lausanne (CH)
(74) Representative: Sacroug, Olivier

(57) **Abstract**

Beverage preparation machine (1), comprising a body (10), a beverage preparation unit (6) located in the body (10) for preparing a beverage, a beverage dispenser (12) in fluid connection with the beverage preparation unit (6) for dispensing a beverage prepared by the beverage preparation unit (6), an electronic device (8), a control unit (5) located in the body (10) for controlling the beverage preparation unit (6) and the electronic device (8), a removable element (13) removable from the body (10), wherein the electronic device (8) is located on the removable element (13) and is controlled and/or powered by the control unit (5) over a wireless communication channel established between the removable element (13) and the body (13) when the removable element (13) is attached to the body (10).

## Description

### TECHNICAL FIELD

The field of the invention pertains to beverage preparation machines, e.g. to machines using capsules of an ingredient of the beverage to be prepared, the machine having a recipient detector for detecting a recipient, for example a cup, a mug, a glass, or any other appropriate beverage receptacle, located under the machine's beverage outlet.

For the purpose of the present description, a "beverage" is meant to include any human-consumable liquid substance, such as tea, coffee, hot or cold chocolate, milk, soup, baby food, etc. A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient. The capsule may contain an amount of ingredient for preparing a single beverage portion or a plurality of beverage portions.

### BACKGROUND

Certain beverage preparation machines use capsules containing ingredients to be extracted or to be dissolved and/or ingredients that are stored and dosed automatically in the machine or else are added at the time of preparation of the drink. Some beverage machines possess filling means that include a pump for liquid, usually water, which pumps the liquid from a source of water that is cold or indeed heated through heating means, e.g. a thermoblock or the like.

Especially in the field of coffee preparation, machines have been widely developed in which a capsule containing beverage ingredients is inserted in a brewing device. The brewing device is tightly closed about the capsule, water is injected at a first face of the capsule, the beverage is produced in the closed volume of the capsule and a brewed beverage can be drained from a second face of the capsule and collected into a recipient such as a cup or glass.

The machine may include a mixing unit, such as a unit operating with an ingredient-containing capsule that is combined in the mixing unit with a liquid, e.g. water, to form a beverage. For example, mixing units have been developed to facilitate insertion of a "fresh" capsule and removal of the capsule upon use. Typically, the mixing unit comprise two parts movable relative to each other from a configuration for inserting/removing a capsule to a configuration for brewing the ingredient in the capsule. The actuation of the movable part of the mixing unit may be manual as disclosed in WO 2009/043630, WO 01/15581, WO 02/43541, WO 2010/015427, WO 2010/128109, WO 2011/144719 and WO 2012/032019. Various handle configurations are disclosed in EP 1867260, WO 2005/004683, WO WO2007/135136, WO 2008/138710, WO 2009/074550, WO 2009/074553, WO 2009/074555, WO 2009/074557, WO 2009/074559, WO 2010/037806, WO 2011/042400, WO 2011/042401 and WO 2011/144720. Integrations of such arrangements into beverage machines are disclosed in WO 2009/074550, WO2011/144719, EP2014195046, EP2014195048 and EP2014195067. The actuation of the movable part of the mixing unit may be motorized, as for example disclosed in EP 1 767 129, WO 2012/025258, WO 2012/025259 and WO 2013/127476.

A beverage machine typically includes a housing containing a beverage processing module and a water tank in fluid communication with the beverage processing module. Examples of such beverage machines are disclosed in EP 1 208 782, EP 1 267 687, EP 1 686 879, EP 1 731 065, EP 1 829 469, EP 1 864 598, EP 1 865 815, EP 1 867 260, EP 1 878 368, EP 2 222 210, EP 2 222 211, EP 2 222 212, EP 2 227 121, EP 2 227 122, US 2008/0006159, US 7,165,488, WO 2007/111884, WO 2009/074553, WO 2010/015427, WO 2011/089210 and WO 2012/055767. Usually the water tank is removable to be refilled by a user when empty. Some systems include a continuous water supply by connecting the beverage machine to the domestic water distribution network.

### SUMMARY

The invention relates to a machine for preparing a beverage. The beverage preparation machine can be an in-home or out of home machine. The machine may be for the preparation of coffee, tea, chocolate, cacao, milk, soup, baby food, etc.

The beverage preparation typically includes the mixing of a plurality of beverage ingredients, e.g. water and milk powder, and/or the infusion of a beverage ingredient, such as an infusion of ground coffee or tea with water. One or more of such ingredients may be supplied in loose and/or agglomerate powder form and/or in liquid form, in particular in a concentrate form. A carrier or diluent liquid, e.g. water, may be mixed with such ingredient to form the beverage. Typically, a predetermined amount of beverage is formed and dispensed on user-request, which corresponds to a portion (e.g. a serving). The volume of such portion may be in the range of 25 to 200 ml and even up to 300 or 400 ml, e.g. the volume for filling a cup, depending on the type of beverage. Formed and dispensed beverages may be selected from ristrettos, espressos, lungos, cappuccinos, latte macchiato, cafe latte, americano coffees, teas, etc. In particular, a coffee machine may be configured for dispensing espressos, e.g. an adjustable volume of 20 to 60 ml per portion, and/or for dispensing lungos, e.g. a volume in the range of 70 to 150 ml per portion.

The machine of the invention preferably has a body with a seat and a beverage processing line extending from a liquid inlet to a beverage outlet.

The liquid inlet may be connected to a source of liquid, e.g. water, such as a machine tank and/or an external liquid supply line, e.g. a domestic water supply line.

The beverage outlet is typically located above a placement location for a beverage recipient, e.g. a cup, a mug or a glass.

Examples of processing lines, machine tanks, external liquid supply lines, outlets and their connections can be found in WO 2009/130099, WO 2010/006953, WO 2010/046442, WO 2010/128109, WO 2011/083103, WO 2011/089210, WO 2011/095502, WO 2011/144723, WO 2012/055765, WO 2012/055767, WO 2012/072758, WO 2013/127907, WO 2016/005348, WO 2016/005349, WO 2016/005350, WO 2016/005351, WO 2017/081055, WO 2017/118713, WO 2018/069266, WO 2018/069268 and EP2228633.

The placement location can be associated with a recipient support for supporting such a recipient under the outlet. The support can be: associated with a drip tray e.g. a drip tray supporting the support; and/or movable relative to the housing vertically under the outlet and/or away from under the outlet for enabling a placement of recipients of different heights under the outlet. Examples of suitable recipient supports are disclosed in EP 0 549 887, EP 1 440 639, EP 1 731 065, EP 1 867 260, US 5,161,455, US 5,353,692, WO 2009/074557, WO 2009/074559, WO 2009/135869, WO 2011/154492, WO 2012/007313, WO 2013/186339, EP 2014198712, EP 2014198710 and EP 2014198715.

The beverage processing line can extend via a pump for pumping the liquid and/or via a thermal conditioner such as a heater and/or a cooler for thermally conditioning the liquid.

The pump can be arranged for driving the liquid from the liquid inlet to the outlet, e.g. a solenoid pump (reciprocating piston pump) or a peristaltic pump or a diaphragm pump. Examples of pumps and their incorporation into beverage machines are disclosed in WO 2009/150030, WO 2010/108700, WO 2011/107574, WO 2013/098173 and WO 2018/001750.

The thermal conditioner may be a boiler or a thermoblock or an on demand heater (ODH), for instance an ODH type disclosed in EP 1 253 844, EP 1 380 243, EP 1 809 151, WO 2009/043851, WO 2009/043865 and WO 2011/157675. A cooler may be provided with a Pelletier arrangement or by using a heat pump.

The beverage processing line may include at least one of: a liquid sensor, e.g. a flowmeter and/or a pressure sensor and/or a temperature sensor, or a sensor of an operational state of the machine. Exemplary sensors and their integration are disclosed in WO 2010/046442, WO 2010/149600, WO 2010/149601, WO 2010/149602, WO 2011/067171, WO 2011/067181, WO 2018/046400 and EP 2228633.

The machine has a removable element that is removably received in or on the machine. In embodiments, the removable element for example forms part of the machine's housing when it is located in or on the machine. In embodiments, the removable element is for example a service unit that is removably received in or on the seat and that for example comprises a foot part and a recipient part removably received in or on the foot part so as to be supported thereby. The foot part for example has a bottom face configured to rest on an external horizontal support surface when the service unit is removed from the seat. Examples of service units are disclosed in WO 2006/050881, WO 2009/074559, WO 2009/135869, WO 2011/086087, WO 2011/086088, WO 2016/096705, WO 2016/096706, WO 2016/096707, WO 2017/118713 and EP 1867260.

The machine can include a control unit for controlling the beverage processing line.

Examples of control units and their integration are disclosed in WO 2009/043865 and WO 2009/130099.

The liquid dispenser may incorporate a user-interface connected to a control unit for controlling the beverage processing line via the control unit.

Examples of such user-interface integration are disclosed in WO 2017/037215, WO 2018/046400, PCT/EP2018/064138, PCT/EP2018/064141 and PCT/EP2018/064145.

The beverage processing line can integrate a beverage mixing unit in fluid communication with the liquid inlet and the beverage outlet. For instance, the beverage mixing unit has a mixing cavity and an ingredient inlet channel for handling an ingredient to be mixed with liquid. Mixing units are known per se and can be of the above mentioned type.

The ingredient inlet channel may have an ingredient gate that has a configuration that allows an ingredient to travel to the mixing cavity and a configuration that prevents an ingredient to travel to the mixing cavity.

Examples of inlet channels fitted with an ingredient gate are disclosed in WO 2012/126971, WO 2014/056641, WO 2014/056642, WO 2014/056730 and WO 2015/086371.

The ingredient inlet channel and the mixing cavity may be configured for handling a preportioned ingredient supplied within an ingredient capsule.

Ingredient capsules are known per se and can be of the above mentioned type.

For instance, the gate includes an obstacle, such as one or more sliding and/or swinging doors, deployed across the ingredient inlet channel in the closed configuration and at least partly retracted from across the ingredient inlet channel in the open configuration.

The gate can be movable, such as pivotable and/or translatable, between a position obstructing the ingredient inlet channel for preventing a passage of the ingredient along the ingredient inlet channel and a position clearing the ingredient inlet channel for allowing a passage of the ingredient along the ingredient inlet channel.

For example, the obstacle forms an ingredient holder, e.g. an ingredient capsule holder, for holding the ingredient prior to the transfer to the beverage processing line.

The capsule holder may have: a capsule holding configuration for holding an ingredient capsule away from the beverage processing line; and a capsule releasing configuration for releasing the capsule in or into the ingredient inlet channel towards the beverage processing line.

Immediately after releasing a capsule to the mixing cavity, the holder may be passed from the releasing configuration to the holding configuration so that the ingredient inlet channel is opened only when needed to release a capsule.

The holder can have a shape complementary to a shape of the capsule.

The holder may have an actuator for passing from the holding to the releasing configuration and vice versa, e.g. an actuator controlled by a or the control unit.

Details of suitable capsule holders are disclosed in WO 2012/126971, WO 2014/056641, WO 2014/056642 and WO 2015/086371.

The holder may have a capsule sensor for sensing a presence of a capsule on the capsule holder and optionally sensing a type of the capsule. The capsule holder can be controlled by the control unit to automatically release a sensed capsule to the mixing cavity. When a particular type of capsule is identified, the control unit may adapt the control of the preparation unit of the beverage according to the identified type.

Details of suitable capsule sensing are disclosed in WO 2012/123440, WO 2014/147128, WO 2015/173285, WO 2015/173289, WO 2015/173292, WO 2016/005352 and WO 2016/005417.

A suitable mixing cavity may be formed by first and second parts that are relatively moved manually or by a motor e.g. as disclosed in EP 1767129, WO 2009/043630, WO 2012/025258, WO 2012/025259, WO 2013/127476 and WO 2014/056641 and in the references cited above.

Such ingredient capsule may be of the type described above under the title "Field of the Invention" and/or the capsule may include an ingredient described under the same title.

The capsule can comprise a capsule body, e.g. a generally straight or tapered body. The capsule can have a circular peripheral annulus flange, e.g. a flexible or rigid flange, extending from a peripheral part, e.g. an edge or face, of the capsule body. The capsule may contain a flavoring ingredient for preparing tea, coffee, hot chocolate, cold chocolate, milk, soup or baby food. Self-opening capsules are for instance disclosed in CH 605 293 and WO 03/059778.

The opening of capsules by a machine's piercing elements of a plate is for example disclosed in EP 512 470 and EP 2 068 684.

Examples of suitable mixing cavities are disclosed in WO 2008/037642 and WO 2013/026843.

A flavoured beverage may be prepared by circulating (e.g. by means of a pump) a carrier liquid, such as water, into the capsule to flavour the liquid by exposure to a flavouring ingredient held in the capsule, e.g. along an extraction direction that may be generally parallel to the direction of relative movement of first and second parts delimiting an exemplary embodiment of the mixing cavity.

When closed capsules are used, the first and second parts may include a capsule opener such as blades and/or a tearing tool, e.g. a plate with a tearing profile, for instance as known from Nespresso™ machines or as disclosed in EP 0 512 470, EP 2 068 684 and WO 2014/076041 and the references cited therein.

Beverage preparation machines may comprise various electronic devices, for example LEDS, presence detectors, code readers, sensors, etc. participating to the performance of various functionalities of the machine. These electronic devices are usually at least indirectly controlled and/or powered by the control unit of the beverage preparation machine. The electronic components are for example soldered on a printed circuit board bearing the control unit and comprising a power supply circuitry, or connected to such circuit board over electric wires running through the machine's body.

The positioning of such electronic devices is thus usually limited to fixed elements of the machine body. In particular, it is often difficult to place such electronic devices in the front part of a coffee machine, which, for accessibility reasons, often comprises one or more removable service units of the machine such as for example a water tank, a used ingredient receptacle, etc., which must be completely detachable from the machine's body in order for example to easily empty, fill and/or wash them.

An object of the present invention is to provide a beverage preparation machine allowing a more flexible placement of electronic devices, in particular sensors or detectors.

Another object of the present invention is to provide a beverage preparation machine offering a greater usability and user friendliness.

These objects and other advantages are achieved by a beverage preparation machine, comprising a body, a beverage preparation unit located in the body for preparing a beverage, a beverage dispenser in fluid connection with the beverage preparation unit for dispensing a beverage prepared by the beverage preparation unit, the beverage dispenser being for example located in the body, an electronic device, a control unit located in the body for controlling the beverage preparation unit and the electronic device, a removable element removable from the body, wherein the electronic device is located on the removable element and is powered and/or controlled by the control unit over a wireless communication channel established between the removable element and the body when the removable element is attached to the body.

The electronic device is for example a recipient detector for detecting the presence of a recipient located under the beverage dispenser in a dispensing configuration, for example deployed out of the machine's body, as explained further below. The recipient detector is for example a microwave detector, an ultrasonic detector or an infrared detector.

Alternatively or in combination thereof, the electronic device is for example a light source, such as for example a LED, a RFID tag reader, or an electronic device comprising a microphone and/or a loudspeaker.

In embodiments, the wireless communication channel comprises a first antenna connected to the control unit and a second antenna connected to the electronic device. The first and second antennas are for example loop antennas. Preferably, the second antenna is aligned with the first antenna when the removable element is attached to the body, in order to allow data communication and/or inductive power transmission between them. In preferred embodiments, the electronic device and the second antenna are embedded into the removable element, for example protected by wall portions of the removable element against external mechanical and/or chemical perturbations such as for example shocks, humidity, water, sunlight. The removable element is thereby preferably watertight and can for example be washed under running water without any risks of impairing the electronic device's future functioning.

Preferably, when the removable element is attached to the body, the electronic device may be powered, preferably under control of the machine's control unit, by electric energy electromagnetically induced over the wireless communication channel.

In embodiments, when the removable element is attached to the body, the electronic device is in data communication with the control unit via the wireless communication channel. This is required in particular when the electronic device receives and/or receives data signals that may then be used by the control unit, for example when the electronic device is a presence detector, a sensor and/or a RFID tag reader. Typically, such an electronic device is configured to communicate data to the control unit when or just after it has been powered over the wireless communication channel.

The use of a wireless communication channel between the electronic device and the rest of the machine's components, in particular the control unit, allows placing the electronic device on a removable element of the machine, without having apparent wires and/or electromechanical connectors between the removable element and the machine's body. This allows in particular embedding completely the electronic component and the related elements of the wireless communication channel into the removable element, which is then preferably protected from external perturbations such as water, humidity, light, dust, etc. by for example wall portions of the removable element.

Particularly in the case of a recipient detector that must be placed such as to survey a detection area under the beverage dispenser, which is usually in front of the machine, the beverage preparation machine of the invention allows placing the detector on a service unit such as a used ingredient receptacle or a water tank, which is preferably placed in front of the machine for accessibility reasons, but must be completely detachable from the machine's body in order to allow its washing and/or filling with water.

### BRIEF DESCRIPTION OF THE DRAWINGS

The invention will now be described with reference to the schematic drawings, wherein:
- Figure 1 is a perspective view from the side of a machine having a body and a removable element in the form of a service unit removably received in a corresponding seat of the body;
- Figure 2 shows a perspective view of the inside of the machine of Fig. 1 with the service unit removed from the body's seat;
- Figure 3 illustrates in cross-section a part of the machine in the state shown in Fig. 1;
- Figure 4 illustrates in cross-section a part of the machine in the state shown in Fig. 2.

### DETAILED DESCRIPTION

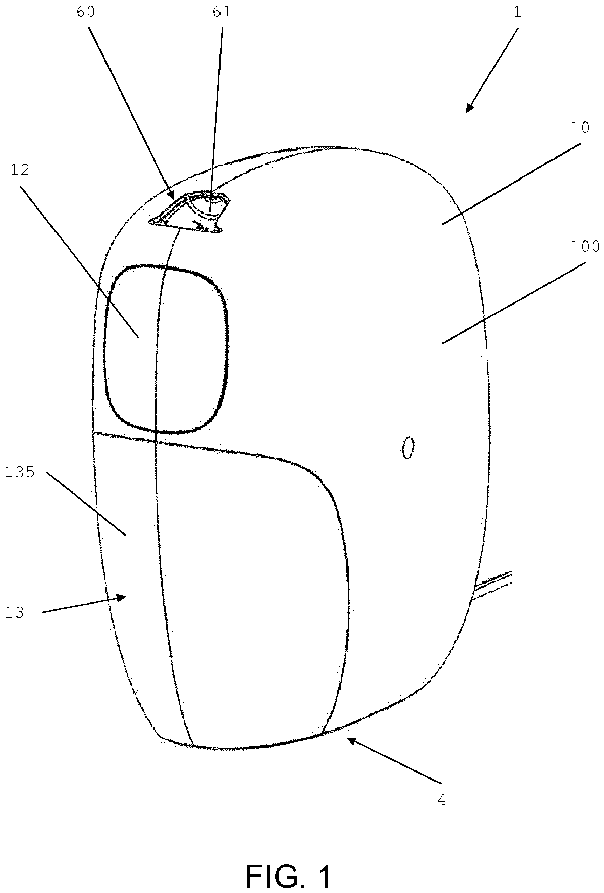

Figures 1 to 4 illustrate an exemplary embodiment of a beverage preparation machine 1 according to the invention and parts of such machine. The machine 1 is configured for preparing a beverage, such as a beverage prepared from an ingredient selected from at least one of: coffee; tea; chocolate; cocoa; milk; soup; and baby food.

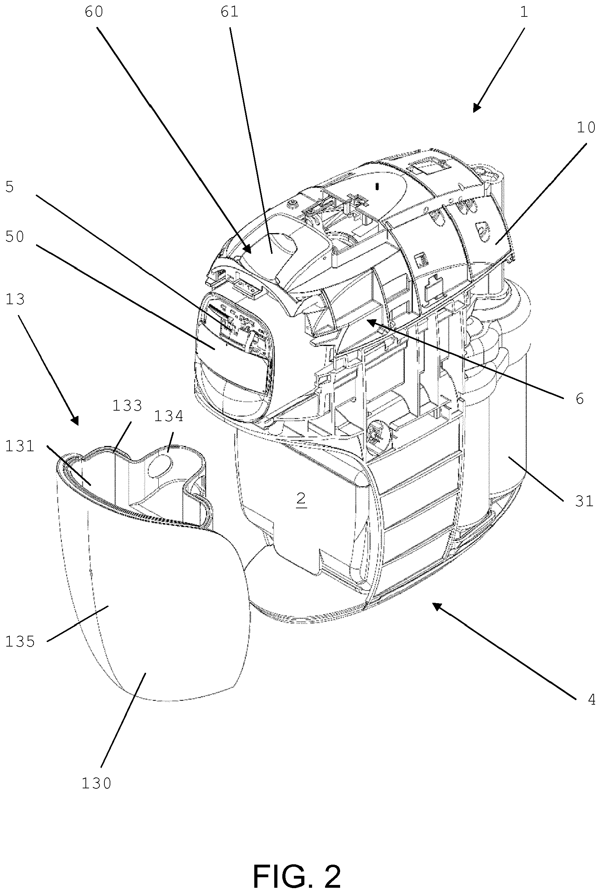

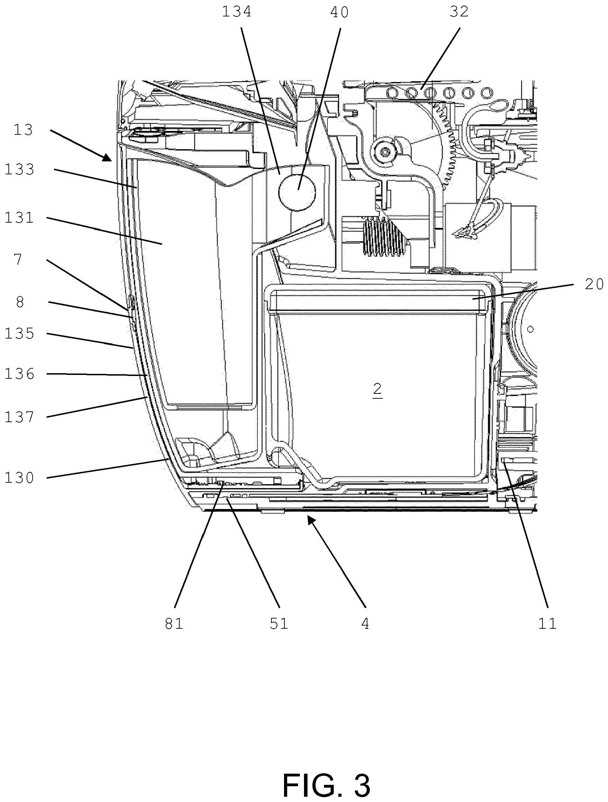

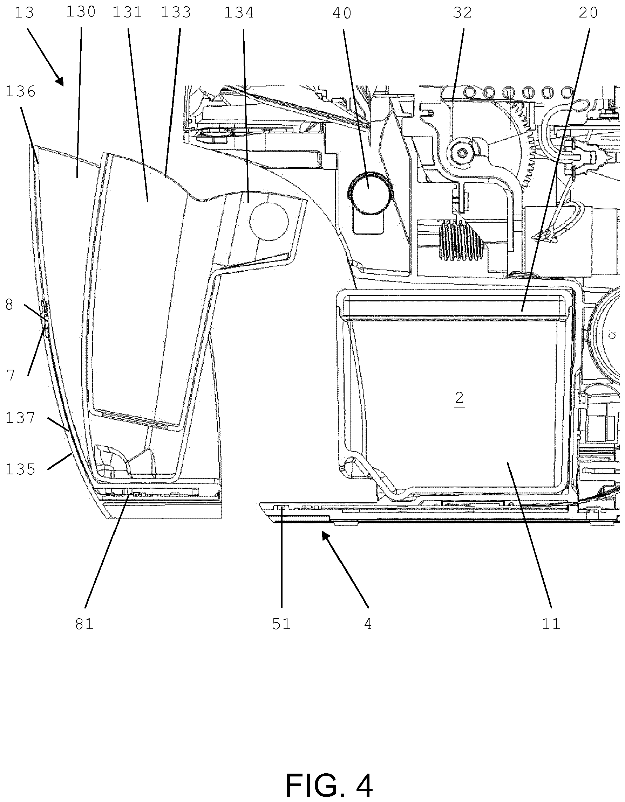

The machine 1 has a body 10 comprising a seat 4 for allowing the machine 1 to rest on a horizontal surface, and a beverage processing line extending from a liquid inlet 11, an example of which is visible in figures 3 and 4, to a beverage dispenser 12, illustrated by way of an example in figure 1. The liquid inlet 11 is preferably connected to a source of liquid, e.g. water, such as a tank 2 and/or an external liquid supply line. With reference to figures 2 and 3, the liquid line for example extends via a pump 31 and/or a thermal conditioner 32 such as a heater and/or a cooler.

The machine 1 comprises a removable element, for example a service unit 13, that is removably received in or on the body 10, for example in or on the seat 4.

In the illustrated embodiment, the service unit 13 comprises a foot part 130 and a recipient part 131 removably received on the foot part 130 so as to be supported thereby. The foot part 130 is preferably configured to rest on an external horizontal support surface when the service unit 13 is removed from the seat 4. The recipient part 131 of the service unit 13 is for example configured to store unused beverage ingredient and/or beverage liquid and/or cleaning fluid to be supplied to the beverage processing line. Alternatively or in combination thereof, the recipient part 131 of the service unit 13 is configured to store used beverage ingredient and/or waste beverage liquid and/or used cleaning fluid, collected from the beverage processing line. In the illustrated embodiment, the recipient part 131 contains a removable auxiliary recipient 133. The auxiliary recipient 133 is for example configured for collecting solid material and has a bottom with one or more through openings for allowing the passage of liquid material from the auxiliary recipient 133 to underneath the auxiliary recipient 133 to be collected in the recipient part 131. The auxiliary recipient 133 for example comprises a handle 134 for seizing the auxiliary recipient 133 in order to remove the auxiliary recipient 133 from the recipient part 131.

The removable element is preferably releasably fastened to or in the body 10. In embodiments, the service unit 13 is for example releasably fastened in the seat 4, such as fastened by at least one of a bias, spring, hook, lock and friction mechanism, e.g. by a resilient and/or magnetically configured connection arrangement. The service unit 13 for example includes a handle 134 that forms a service unit connector of a connection arrangement 40, 134, as illustrated in figures 3 and 4.

The tank 2 is for example removably received in or on the seat 4 when connected to the liquid inlet 11. For instance, the tank 2 is insertable into or onto the seat 4 and removable from the seat 4 providing the removable element, e.g. the service unit 13, has been removed from the seat 4. The tank 2 can be fitted with a lid 20 movable or removable for filling the tank 2 with liquid. The tank 2 may be provided with an outlet connector that is connectible to the liquid inlet 11. For instance, the outlet connector and the liquid inlet 11 have a generally horizontal connection and disconnection direction.

The liquid dispenser 12 includes a beverage outlet for dispensing the beverage, for example in a user recipient located under the liquid dispenser 12. The beverage outlet 12 is for example fixed to a dispensing head of the liquid dispenser 12. In the illustrated embodiment, the liquid dispenser 12 has a dispensing head that bears the beverage outlet and that can move inwards into the body 10 for storage and outwards out of the body 10 for dispensing.

The machine 1 preferably comprises a user interface 50 connected to the machine's control unit 5 for displaying information to a user and/or allowing a user at least partly controlling the beverage processing line. The user interface for example comprises a touch screen located in the dispensing head. As illustrated in figure 1, the touch screen is for example covered by a protective skin that preferably forms part of the machine housing 100 while allowing the use of the touch screen through it.

The beverage processing line for example comprise a beverage mixing unit 6 in fluid communication with the liquid inlet 11 and the liquid dispenser 12. For instance, the beverage mixing unit 6 has a mixing cavity and an ingredient inlet channel 60 for handling an ingredient to be mixed with the liquid. The ingredient inlet channel 60 for example comprises an ingredient gate 61 that has a configuration that allows an ingredient to travel to the mixing cavity and a configuration that prevents an ingredient to travel to the mixing cavity. The ingredient inlet channel 60 and the mixing cavity are for example configured for handling a preportioned ingredient supplied within an ingredient capsule.

According to the invention, the machine 1 comprises an electronic device 8, e.g. a signal or light emitter and/or signal or light sensor, arranged in or on the removable element 13.

In preferred embodiments, the electronic device 8 is a recipient detector configured for detecting the presence of an object in a detection area, typically for detecting the presence of a recipient in a specific location relative to the machine 1 when the removable element 13 is attached to the body 10 of the machine 1, preferably in a location allowing the dispensing by the machine 1 of a beverage in the recipient. The recipient detector 8 is for example configured for detecting the presence of a recipient in a location that is under the beverage outlet of the liquid dispenser 12 when the liquid dispenser 12 is in a dispensing configuration, e.g. when the dispensing head is deployed out of the body 10. The recipient detector 8 is for example an infrared, microwave or ultrasonic detector, or any other appropriate presence and/or movement detector. Typically, when the recipient detector 8 detects the presence of an object in the surveyed detection area, it emits an electric signal, or signal variation, indicative of the detected presence. The electric signal emitted by the recipient detector is transmitted to the control unit 5 of the machine 1, which is thereby informed that an object, for example a user's recipient, is located in the detection area, e.g. under the beverage outlet in a dispensing configuration, ready to receive a beverage prepared and dispensed by the machine 1.

In other embodiments, the electronic device 8 is a recipient identifier, for example a RFID reader for reading RFID tags attached to or embedded in user recipients. The RFID reader preferably comprises a dedicated near field antenna, not represented in the figures, embedded for example in a front part of the removable element 13 such as to be able to read RFID tags of recipients placed in front of the machine 1, when the removable element 13 is attached to the body 10 of the machine 1. The RFID tags may for example contain information about the volume capacity of the corresponding recipient, an identification of the recipient owner, user preferences for the beverage to be dispensed by the machine, etc. When the recipient is placed under the beverage outlet in a dispensing configuration, the RFID reader for example reads the information contained in the RFID tag of the recipient and transmits this information to the control unit 5 of the machine, which may for example use this information for dispensing the right beverage into the recipient, for example for customizing the beverage selected by the user through the machine's user interface 50.

In yet other embodiments, the electronic device 8 may be a light, for example a LED, a loudspeaker, a microphone, a camera, etc., in order for example to transmit signals to a user of the machine 1 and/or for receiving information from the user.

The removable element, e.g. the service unit 13, for example comprises a portion that forms part of the machine housing 100 when the removable element is fastened to the machine 1 and the electronic device is preferably located in or on said portion. In the illustrated embodiment, the foot part 130 has an upright wall portion 135 forming a front part of the machine housing 100 when the service unit 13 is fastened to the body 10, for example an upright wall portion 135 covering the seat 4 when the service unit 13 is received on the seat 4. The electronic device, e.g. the presence detector 8, is for example arranged on or in the upright wall portion 135, for example in a cavity 7 of the upright wall portion 135 delimited between an inner upright wall portion 136 and an outer upright wall portion 137.

According to the invention, the electronic device 8 is directly or indirectly controlled and/or powered by the control unit 5 of the machine 1 via a wireless communication channel when the removable element, e.g. the service unit 13, is attached to the body 10 of the machine 1.

When the removable element 13 is attached to the body 10 of the machine 1, the electronic device 8 is thus for example in data communication with the control device 5 over said wireless communication channel, e.g. an inductive communication channel. The wireless communication channel preferably comprises two antennas 51, 81, e.g. two loop antennas, located and configured to wirelessly communicate with each other when the removable element 13 is attached to the body 10 of the machine 1. For example. a first antenna 51 is located in the seat 4 of the machine 1 and directly or indirectly connected to the control unit 5, while a second antenna 81 is located in the lower part of the foot part 130 of the removable element 13 and connected to the electronic device 8. The first and second antennas 51, 81 are preferably aligned with each other when the removable element 13 is attached on or in the body 10 in order to allow a wireless data communication between them. The first and second antennas 51, 81 are for example each embedded in a printed circuit board of the seat 4 and of the removable element 13, respectively.

Alternatively or in combination with the above, the electronic device 8 is powered via said wireless communication channel when the removable element 13 is attached to the body 10. Typically, the control unit 5 directly or indirectly drives the first antenna 51 by electric power from the machine's power source in order to generate a time-varying electromagnetic field, which wirelessly transmits power to the second antenna 81. The second antenna 81 extracts power from the field and supplies it to the electronic device 8.

The wireless communication channel between the removable element 13 and the body 10 is preferably a Near Field Communication (NFC) channel using for example a high radio frequency, e.g. 13.56 MHz. The communication between the removable element 13 and the body 10 is thus preferably interrupted when the removable element 13 is detached from the body 10 of the machine 1. The loss of communication between the control unit 5 and the electronic device 8 may then for example be used as a signal for the control unit 5 that the removable element 13 is detached and thus the machine is not ready for preparing a beverage.

In embodiments, the electronic device 8 is powered over the wireless communication channel continuously or at regular intervals, in order for example to regularly monitor whether a recipient has been placed in the detection area and/or to sense environmental noise, etc.

In embodiments, the electronic device 8 is powered at specific moments, following for example a specific triggering event or combination of events detected by the control unit 5, such as for example the introduction of a command by a user of the machine 1 through the user interface 50, the detection of an ingredient capsule introduced in the ingredient inlet channel 60, etc. For example in the case where the electronic device 8 is a recipient detector, the triggering event may be the selection of a beverage by a user through the user interface 50. Once the triggering event is detected by the control unit 5, the recipient detector 8 is powered in order to detect whether a recipient is present in the detection area and thus ready to receive the beverage, or not. The recipient detector 8 is powered, for example continuously or at regular intervals, until a signal indicating the detection of an object in the detection area is received by the control unit 5. The preparation of the beverage is for example started only if the recipient detector 8 detects the presence of an object in the detection area and a corresponding signal is received by the control unit 5.

Preferably, the elements of the wireless communication channel, in particular the first and second antennas 51, 81, are not accessible to the user of the machine 1 and protected against external mechanical and/or chemical perturbations such as shocks, humidity, water, sunlight, etc. The first antenna 51 is for example embedded in the seat 4 and covered by the outer skin, or housing, of the body 10, while the second antenna 81 is embedded in the removable element, for example embedded in the wall of the service unit, for example in a closed space between an inner wall portion and an outer wall portion of the foot part 130.

According to the invention, the removable element 13, e.g. the service unit 13, is thus completely detachable from the body 10 and bears no electromechanical connectors to connect the electronic device 8, e.g. the recipient detector 8, to the control unit 5 and/or the power supply circuitry of the machine 1. The removable element is therefore preferably completely water tight and may thus be cleaned under running water without any risk of damaging the electronic device 8 and/or the related connectivity elements.

## Claims

1. Beverage preparation machine (1), comprising:
- a body (10);
- a beverage preparation unit (6) located in said body (10) for preparing a beverage;
- a beverage dispenser (12) in fluid connection with said beverage preparation unit (6) for dispensing a beverage prepared by said beverage preparation unit (6);
- an electronic device (8);
- a control unit (5) located in said body (10) for controlling said beverage preparation unit (6) and said electronic device (8);
- a removable element (13) removable from said body (10);
wherein said electronic device (8) is located on said removable element (13) and is controlled and/or powered by said control unit (5) over a wireless communication channel established between said removable element (13) and said body (13) when said removable element (13) is attached to said body (10).

2. Beverage preparation machine (1) to the preceding claim, wherein said electronic device is a recipient detector (8) for detecting the presence of a recipient located under said beverage dispenser (12) in a dispensing configuration.

3. Beverage preparation machine (1) according to the preceding claim, wherein said recipient detector (8) is one of a microwave detector, an ultrasonic detector or an infrared detector.

4. Beverage preparation machine (1) according to claim 1, wherein said electronic device is a light source, such as for example a LED.

5. Beverage preparation machine (1) according to claim 1, wherein said electronic device is a RFID tag reader.

6. Beverage preparation machine (1) according to claim 1, wherein said electronic device comprises a microphone and/or a loudspeaker.

7. Beverage preparation machine (1) according to any one of the preceding claims, wherein said wireless communication channel comprises a first antenna (51) connected to said control unit (5) and a second antenna (81) connected to said electronic device (8).

8. Beverage preparation machine (1) according to the preceding claim, wherein said first and second antennas (51, 81) are loop antennas.

9. Beverage preparation machine (1) according to any one of claims 7 or 8, wherein said second antenna (81) is aligned with said first antenna (51) when said removable element (13) is attached to said body (10) in order to allow data communication and/or inductive power transmission between said first antenna (51) and said second antennas (81).

10. Beverage preparation machine (1) according to any one of claims 7 to 9, wherein said electronic device (8) and said second antenna (81) are embedded into said removable element (13).

11. Beverage preparation machine (1), according to the preceding claim, wherein said electronic device (8) and said second antenna (81) are protected by wall portions of said removable element (13) against external mechanical and/or chemical perturbations such as for example shocks, humidity, water, sunlight.

12. Beverage preparation machine (1) according to any one of the preceding claims, wherein said electronic device (8) may be powered by electric energy electromagnetically induced over said wireless communication channel when said removable element (13) is attached to said body (10).

13. Beverage preparation machine (1) according to anyone of the preceding claims, wherein said electronic device (8) is in data communication via said wireless communication channel with said control unit (5) when said removable element (13) is attached to said body (10).

14. Beverage preparation machine (1) according to the preceding claim, wherein said electronic device (8) is configured to communicate data to said control unit (5) when powered over said wireless communication channel.
